# EUROPEAN PATENT SPECIFICATION

(11) **EP 3 129 170 B1**
(45) Date of publication and mention of the grant of the patent: **07.03.2018**
(21) Application number: 14728617.3
(22) Date of filing: 10.04.2014
(51) Int. Cl.: B21D 28/22, B21D 43/22, H01F 41/02, H02K 15/02

(54) **SYSTEM AND METHOD FOR IMPROVING FLATNESS AND COMPACTNESS OF INTERLOCKING PACKAGES BY MEANS OF A QUICK- RELEASE ROTARY SPINDLE HEAD AND A THREADED SPINDLE**
SYSTEM UND VERFAHREN ZUR VERBESSERUNG DER FLACHHEIT UND KOMPAKTHEIT VON INEINANDERGREIFENDEN VERPACKUNGEN MITTELS EINES SCHNELLLÖSENDEN ROTIERENDEN SPINDELKOPFES UND EINER GEWINDESPINDEL
SYSTÈME ET PROCÉDÉ POUR AMÉLIORER LA PLANÉITÉ ET LA COMPACITÉ DE DISPOSITIFS DE VERROUILLAGE AU MOYEN D'UNE TÊTE DE BROCHE ROTATIVE À LIBÉRATION RAPIDE ET D'UNE BROCHE FILETÉE

(43) Date of publication of application: 15.02.2017
(73) Proprietor: NELA, Razvojni center za elektroindustrijo in elektroniko d.o.o., 4228 Zelezniki (SI)
(72) Inventor: STURM , Bostjan, 5282 Cerkno (SI); STANIC , Robert, 35209 Vranovci (HR)
(74) Representative: Macek, Gregor
(86) International application number: PCT/IB2014/000514
(87) International publication number: WO 2015/155559

(56) References cited:
- WO-A1-2011/053258
- JP-A- 2006 026 735
- JP-A- 2011 020 132
- JP-A- 2011 062 732

## Description

The present invention relates to the technical process of producing a laminated rotor package of an electric drive in a progressive blanking tool, and specifically to a system according to the preamble of claim 1, with a quick-release rotary spindle head and a threaded spindle allowing the package to be additionally pressed in the arresting part of the tool. Said system allows for a faster substitution of the quick-release spindle head and for a more rigid operation of the system as such, thereby improving the flatness E and the compactness of laminated/interlocking packages. Herein, the term interlocking will refer to the conventional technical process of mechanically interconnecting laminations to form a laminated package, whereby individual laminas, the basic building components of a rotor or stator package, are joined by mechanical connections, known as interlocking tabs or clamps, disposed in convenient or allowable locations on the individual laminas.

The invention relates to a construction of a system, which is part of a progressive blanking tool, the system comprising a quick-release rotary spindle head and a threaded spindle which, in combination with other structural solutions customary in the field of progressive blanking tools, allow for faster substitution of the spindle head assembly, as well as for a more rigid operation of the system, in order to produce flatter and more compact interlocking packages of complex shapes.

In recent times, manufacturing electric drives has become increasingly challenging due to strict international regulations having to do with efficiency and consequently with the energy class, with demands for reduced noise and reduced emissions of dangerous/harmful substances in the technological process.

Likewise, there has been an ever-growing demand for improved efficiency of electric motors, which consequently means stricter requirements in the fabrication of interlocking packages, encompassing rotor and stator packages alike. A rotor or stator package is composed of basic building elements called laminas. Laminas are the end product of progressive stamping, or blanking, wherein predetermined cutouts or shapes are fashioned in the lamina by following predetermined steps and using various cutting elements; packages being stacks of such laminations, integrated into a compact core, called a package. In order to make a rotor or stator package strong enough, laminations are joined together by using various techniques. The technique which is most widely used employs clamps or tabs, the shape whereof is tailored to the thickness of the sheet metal the laminations are made of. However, the flatness of a package cannot be guaranteed by the shape of the clamp alone. The flatness of the front side of a package mainly depends on the size of the cutting edge A on the outer diameter of the lamination, on the thickness of the sheet, on the geometry of the cutting edge, and on the ratio between the length of the cutting edge A along the outer diameter of the lamina and the thickness of the bridge B. In certain cases, because of the geometry of the lamina, it is not possible to design a favorable position for the interlocks which would ensure the flatness of the front side of the package, and the geometry of the lamina being is the main factor determining the flatness, and consequently the compactness, the idle running, and the squareness of the package, which all affect the operation of the electric motor. Hereinafter, the term "interlocking package" shall be intended as referring to rotor and stator laminated packages alike.

In the field of improvements to the rigidity and the ease of assembly of the system for improving the flatness of complexly shaped laminas, several similar solutions exist, all of which, however, struggle with finding a quality overall solution for the system, which strongly affects the assembly time and the quality of operation of the system for improving the flatness and the compactness of interlocking packages.

A system for improving flatness and compactness in interlocking packages of known design is the system with a hydraulic cylinder, disclosed in WO2011053258(A1). In the particular case, the system has its own control unit which controls the stroke of the hydraulic cylinder by means of a hydraulic pump and control valves. The said hydraulic cylinder is fixed to the lower part of the base panel which is inserted into the table of the stamping machine and serves as support to the tool. Into this panel a bore is made, extending to the lower part of the tool. At the end of the piston rod, an axially pivotable head is mounted. The piston rod pushes the head to the arresting device in the tool. During blanking, the laminations, in other words, the unfinished interlocking packages, are held not only by the arresting device in the tool, but by the piston rod with the support head as well, which retreats by the thickness of a single lamination in the vertical direction towards the starting point synchronously with the abutment of the tool. When the package is released, exiting the arresting device, the piston rod quickly retracts to the level of the base panel, so that the blanked package may be removed from the tool. After the package is ejected, the piston rod with the head moves back up to the arresting device in the tool, supporting the new package being blanked. Overall, the system is effective at preventing lamina deformation and improving compactness, but it exhibits some deficiencies in the accuracy of the overall response of the system, because air can not be completely removed from the hydraulic system, which renders the system not perfectly rigid, leading to uncontrollable errors in the movement of the piston rod. An additional problem is posed by the heating of the hydraulic fluid, reflected again in the operating precision of the system. The system as a whole is also unwieldy to assemble, and despite the fact that the axially pivotable head can be exchanged, mounting it into another tool takes a long time due to the bulk of the hydraulic cylinder and to the complexity of system design.

In JP application No. JP 2011 020132, on which the preamble of claim 1 is based, a system suitable for improving the flatness and the compactness of interlocking packages in a progressive blanking too is disclosed. Said system comprises a servomotor, coupled directly to the electronics or the programming system of the blanking machine and operating in synchronicity with the operation of the blanking machine, a reducing gear, transferring the revolutions to a threaded spindle which is movable in a vertical direction, a threaded spindle, on which there is mounted a quick-release rotary head of the spindle, supporting the interlocking package in the exit region of the tool.

It is a further deficiency of the said system and other systems of this type that they have many component parts, requiring a lot of maintenance and a long assembling time, besides rendering the systems less precise as the errors of individual components add up, which all results in higher production costs.

It is the object and purpose of the present invention to provide a system and a process which will do away with all the foregoing technical inadequacies, that is, a system and a process providing shorter assembling and disassembling times, having a minimal number of components, not having a dedicated control system and being controllable by the programming system of the blanking machine instead, and exhibiting a higher rigidity during operation, resulting in improved precision, and consequently easier control of the movements of the threaded spindle. This object is achieved according to the invention by a system with the features of claim 1 and by a process as defined in claim 5. The proposed invention shall be described according to a preferred embodiment of the system for improving flatness and compactness of interlocking packages having an integrated quick-release rotary spindle head and a threaded spindle and the appended drawings, in which:

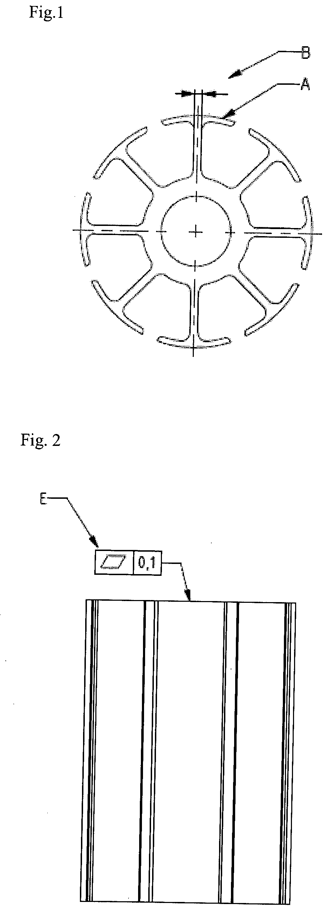

Figure 1 - shows a stator lamination;
Figure 2 - shows a vertically positioned rotor package;

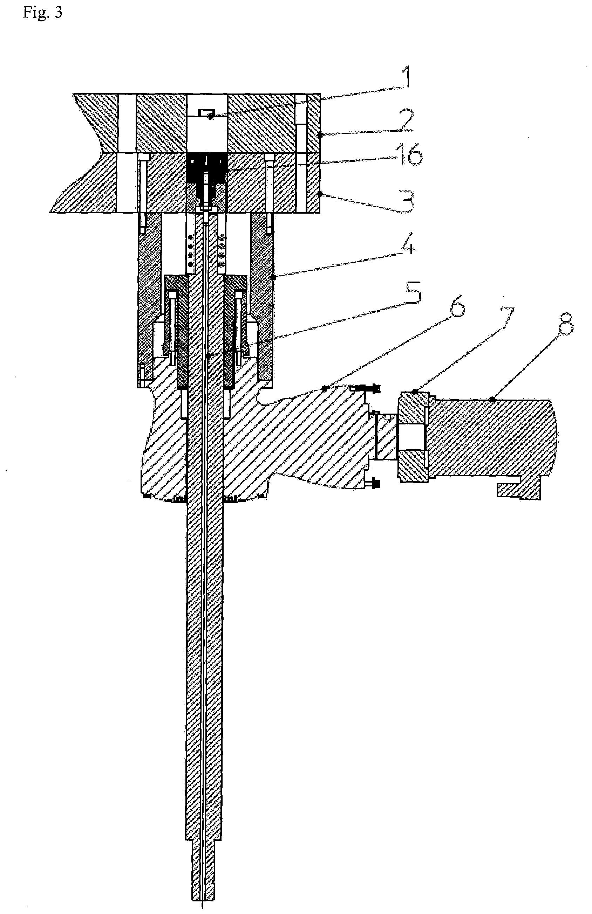

Figure 3 - shows the entire system of the invention in a cross-section of the support system;
Figure 4 - shows a detailed cross-section of the quick-release rotary spindle head.

The system for improving the flatness and the compactness of interlocking packages has an integrated quick-release rotary spindle head and a threaded spindle comprises a servomotor 8, coupled directly to the electronics or the programming system of the blanking machine and operating in synchronicity with the operation of the blanking machine, a reducing gear 6 transferring the revolutions to a threaded spindle 5 which is movable in a vertical direction, and a threaded spindle 5, on which a quick-release rotary head 16 of the spindle is mounted. The quick-release rotary head 16 of the spindle supports the interlocking package in the exit region of the tool. In the quick-release rotary head 16 of the spindle an additional disc spring 15 is inserted, which protects the threaded spindle 5 from getting damaged in the case of abutting on the interlocking package from below. In the case of a malfunction of the servomotor 8, or of the movement of the threaded spindle 5 being set incorrectly, resulting in the threaded spindle 5 standing still or moving in the opposite direction during blanking, an uncontrollable abutting of the head 9 against the interlocking package occurs, causing the head 9, the washer 10, and the head support 11 to be displaced vertically, leading to a deformation of the disc springs 15. At that moment a vertical displacement of the screw 17, by means of which the spacer 13 is secured to the head support 11, takes place, with said screw 17 actuating the sensor 14, fixed to the end of the threaded spindle 5, and causing said sensor 14 to signal the control system of the blanking machine to stop the blanking machine.

The sensor 1 is mounted in the lower region of the tool 2 and has the purpose of determining the upper limit position of the threaded spindle 5, and consequently of the quick-release rotary head 16 of the spindle. By means of the flange 7, the reducing gear 6 is fastened to the base panel 3, which is inserted into the table of the blanking machine and serves as support to the tool. The servomotor 8 is secured to the reducing gear 6 in the horizontal direction, and operatively coupled to the programming system of the blanking machine.

In this manner, a synchronous operation of the blanking tool and of the entire system for improving the flatness and the compactness of interlocking packages with an integrated quick-release rotary head and a threaded spindle is made possible, the pressure exerted on the interlocking package is stabler and more constant due to the rigidity provided by the threaded spindle. The extreme position of the quick-release rotary head 16 of the spindle and of the threaded spindle 5, or rather, its upper limit position, is protected by means of the sensor 1, so that damage to the threaded spindle 5 can not occur.

The operating principle of the system for improving the flatness and the compactness of interlocking packages having an integrated quick-release rotary spindle head and a threaded spindle in a progressive blanking tool is as follows:
During a move, the programming system of the blanking machine sends a signal to the servomotor 8, which rotates for a precisely determined step, depending upon the displacement of the blanking machine and upon the preset sheet thickness. By means of the flange 7, the motor 8 is fastened to the reducing gear 6, wherein the revolutions are transferred to the threaded spindle 5 by means of a worm-wheel and a worm having a gear ratio of 16:1. The quick-release rotary head 16 of the spindle is secured to the threaded spindle 5 by means of a collar 12. The disclosed system as a whole is fixed to the base panel 3 by means of a flange 4, and the base panel 3, serving as support to the tool, is inserted into the table of the blanking machine. To the base panel 3, serving as support to the tool, the lower portion of the tool 2 is then fixed, in which there is located a sensor 1 for determining the upper limit position of the threaded spindle 5 with the quick-release rotary head 16 of the spindle.

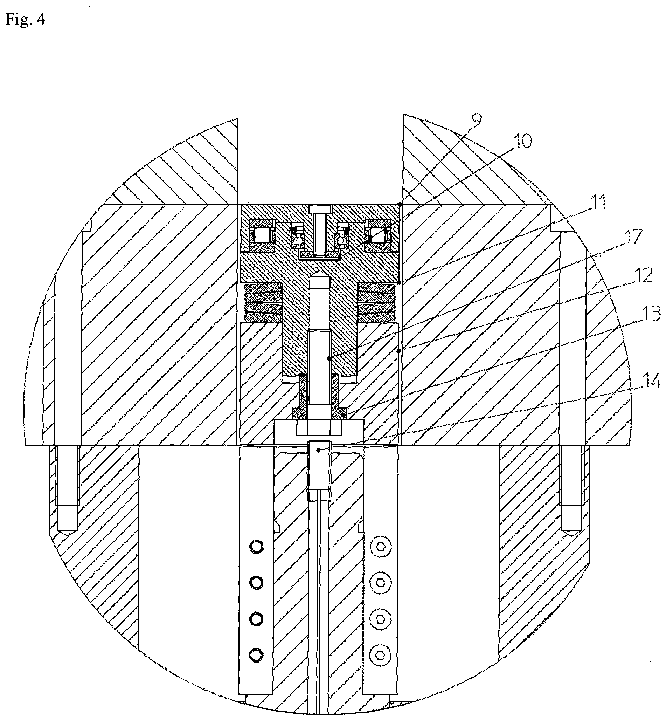

The quick-release rotary head 16 of the spindle, illustrated in Figure 4, is composed of: a head 9, enabling axial displacement in the case of the blanked interlocking package being rotated inside the tool, a washer 10, into which the head 9 is screwed by means of a screw, the head support 11 under which two disc springs 15 are disposed for cushioning the abutments of the interlocking package against the head 9 during blanking, a collar 12 for securing the head support 11 as well as securing the quick-release rotary head 16 of the spindle to the threaded spindle 5, and the spacer 13 for keeping a constant clearance between the collar 12 and the head support 11. The screw 17 secures the spacer 13 to the head support 11. The collar 12 doubles as a guide to the spacer 13, thereby enabling the screw 17, the head support 11, the washer 10, and the head 9 to be displaced vertically. In the case of a malfunction of the servomotor 8 during blanking, an uncontrollable vertical displacement of the head 9, the washer 10, and the head support 11 occurs, leading to a deformation of the disc springs 15. At the same time, there is a vertical displacement of the spacer 13, and consequently of the screw 17, which, in turn, actuates the sensor 14, which then signals the control system of the blanking machine to stop the same.

When the sensor 1 for determining the upper limit position of the threaded spindle 5 with the quick-release rotary head 16 of the spindle detects the upper limit position of the threaded spindle 5, it sends a signal to the control system of the blanking machine, and via the said system to the servomotor 8, which receives the command to move, which is to say, to start blanking a further interlocking package, as a result of which the threaded spindle 5 is pivoted and the threaded spindle 5 with the quick-release rotary head 16 of the spindle is displaced vertically by the thickness of a single lamination.

Based on the number of revolutions of the servomotor 8, the program package of the blanking machine determines the lower limit position of the threaded spindle 5, in other words, the position in which the threaded spindle 5 with the quick-release rotary head 16 of the spindle reaches the base panel 3 which serves as support to the tool, and the interlocking package is removed from the tool. As soon as the interlocking package is removed from the tool, the threaded spindle 5 with the quick-release rotary head 16 receives the command to move up to the arresting device in the tool, or to a predetermined position, that is to the upper limit position of the threaded spindle 5 detected by the sensor 1, thus rendering support in the blanking of a further interlocking package. This cycle is repeated through the entire operation of the tool, that is, through the entire blanking process.

## Claims

1. System for improving the flatness and the compactness of interlocking packages in a progressive blanking tool, wherein said system comprises a servomotor (8), coupled directly to the electronics or the programming system of the blanking machine and operating in synchronicity with the operation of the blanking machine, a reducing gear (6), transferring the revolutions to a threaded spindle (5) which is movable in a vertical direction, on which there is mounted a quick-release rotary head (16) of the threaded spindle (5), supporting the interlocking package in the exit region of the tool, **characterized in that** the system further comprises a sensor (1) located in the lower region of the tool (2), and a sensor (14), fixed to the end of the threaded spindle (5), the quick-release rotary head (16) of the spindle comprising: a head (9), enabling axial displacement in the case of the blanked interlocking package being rotated inside the tool, a washer (10), into which the head (9) is screwed by means of a screw, a head support (11) under which two disc springs (15) are disposed for cushioning the abutments of the interlocking package against the head (9) during blanking, a collar (12) for securing the head support (11) as well as securing the head (9) to the threaded spindle (5), a spacer (13) for keeping a constant clearance between the collar (12) and the head support (11), and a screw (17) for securing the spacer (13) to the head support (11).

2. System according to Claim 1, **characterized in that** the collar (12) doubles as a guide to the spacer (13), enabling the screw (17), the head support (11), the washer (10), and the head (9) to be displaced vertically.

3. System according to any preceding claim, **characterized in that** the sensor (1) is mounted in the lower region of the tool (2) and determines the upper limit position of the threaded spindle (5), and consequently of the quick-release rotary head (16) of the spindle.

4. System according to any preceding claim, **characterized in that** the sensor (14) is secured to the end of the threaded spindle (5) and in the case of a malfunction of the servomotor (8) signals the control system of the blanking machine to stop the blanking machine.

5. Process for producing a laminated rotor package of an electric drive in a progressive blanking tool, wherein said process is carried out on the system according to claims 1 to 4, **characterized in that,** when the sensor (1) for determining the upper limit position of the threaded spindle (5) with the quick-release rotary head (16) of the spindle detects the upper limit position of the threaded spindle (5), it sends a signal to the control system of the blanking machine, and via the said system to the servomotor (8), which receives the command to move, that is, to start blanking a new interlocking package, as a result of which the threaded spindle (5) is pivoted and the threaded spindle (5) with the quick-release rotary head (16) of the spindle is displaced vertically by the thickness of a single lamination; when the program package of the blanking machine determines, based on the number of revolutions of the servomotor (8), the lower limit position of the threaded spindle (5), that is, the position in which the threaded spindle (5) with the quick-release rotary head (16) of the spindle reaches the base panel (3) which serves as support to the tool, the interlocking package is removed from the tool; when the interlocking package is removed from the tool, the threaded spindle (5) with the quick-release rotary head (16) receives the command to move up to the arresting device in the tool, or to a predetermined position, that is, to the upper limit position of the threaded spindle (5) detected by the sensor (1), thus rendering support in the blanking of a further interlocking package; this cycle is repeated through the entire blanking process.

6. Process according to Claim 5, **characterized in that** in the case of a malfunction of the servomotor (8), or of the movement of the threaded spindle (5) during blanking being set incorrectly, an uncontrollable abutting of the head (9) against the interlocking package occurs, causing the head (9), the washer (10), and the head support (11) to be displaced vertically, leading to a deformation of the disc springs (15), at that moment a vertical displacement of the screw (17) takes place, with said screw (17) actuating the sensor (14), fixed to the end of the threaded spindle (5), and said sensor (14) signaling the control system of the blanking machine to stop the blanking machine.

## Patentansprüche

1. System zur Verbesserung der Flachheit und Kompaktheit von ineinandergreifenden Verpackungen in einem progressiven Stanzwerkzeug, wobei das genannte System einen Servomotor (8) umfasst, derunmittelbar mit der Elektronik bzw. dem Programmiersystem der Stanzmaschine gekoppelt ist und synchron zum Betrieb der Stanzmaschine arbeitet, ein Untersetzungsgetriebe (6), das Umdrehungen auf eine in vertikaler Richtung bewegliche Gewindespindel (5) überträgt, eine Gewindespindel (5), an der ein schnelllösender Drehkopf (16) der Spindel gelagert ist, der das ineinandergreifende Paket im Austrittsbereich des Werkzeugs unterstützt, **dadurch gekennzeichnet, dass** das System außerdem einen Sensor (1), der sich im unteren Bereich des Werkzeugs (2) befindet, und einen Sensor (14), der am Ende der Gewindespindel (5) befestigt ist, umfasst, wobei der schnelllösende Drehkopf Kopf (16) der Spindel umfasst: einen Kopf (9), der eine axiale Verschiebung im Falle der Drehung des ausgestanzten ineinandergreifenden Pakets im Inneren des Werkzeugs ermöglicht, eine Unterlegscheibe (10), in die der Kopf (9) mittels einer Schraube eingeschraubt ist, eine Kopfstütze (11), unter der zwei Tellerfedern (15) angeordnet sind, um die Widerlager des ineinandergreifenden Paketswährend des Ausstanzens gegen den Kopf (9) abzufedern, einen Kragen (12) zur Befestigung der Kopfstütze (11) sowie zur Befestigung des Kopfes (9) an der Gewindespindel (5), einen Abstandshalter (13) zum Halten eines konstanten Abstands zwischen dem Kragen (12) und der Kopfstütze (11), und eine Schraube (17) zur Befestigung des Abstandshalters (13) an der Kopfstütze (11).

2. System nach Anspruch 1, **dadurch gekennzeichnet, dass** der Kragen (12) als Führung zum Abstandshalter (13) dient, so dass die Schraube (17), die Kopfstütze (11), die Unterlegscheibe (10) und der Kopf (9) vertikal verschiebbar sind.

3. System nach einem der vorhergehenden Ansprüche, **dadurch gekennzeichnet, dass** der Sensor (1) im unteren Bereich des Werkzeugs (2) angebracht ist und den oberen Endanschlag der Gewindespindel (5) und folglich des schnelllösenden Drehkopfs (16) der Spindel bestimmt.

4. System nach einem der vorhergehenden Ansprüche, **dadurch gekennzeichnet, dass** der Sensor (14) am Ende der Gewindespindel (5) befestigt ist und bei einer Fehlfunktion des Servomotors (8) das Steuersystem der Stanzmaschine das Anhalten der Stanzmaschine signalisiert.

5. Verfahren zur Herstellung eines laminierten Rotorpakets eines elektrischen Antriebs in einem progressiven Stanzwerkzeug, wobei das Verfahren am System nach den Ansprüchen 1 bis 4 ausgeführt ist, **dadurch gekennzeichnet, dass,** wenn der Sensor (1) zur Bestimmung des oberen Endanschlags der Gewindespindel (5) mit dem schnelllösenden Drehkopf (16) der Spindel den oberen Endanschlag der Gewindespindel (5) erfasst, sendet er ein Signal an das Steuersystem der Stanzmaschine sowiean den Servomotor (8), der einen Befehl zur Bewegung empfängt, d. h. um ein neues ineinandergreifendes Paket zu stanzen, wodurch die Gewindespindel (5) geschwenkt wird und die Gewindespindel (5) mit dem schnelllösenden Drehkopf (16) der Spindel um die Dicke einer einzelnen Lamelle vertikal verschoben wird; wenn das Programmpaket der Stanzmaschine aufgrund der Anzahl der Umdrehungen des Servomotors (8) den unteren Endanschlag der Gewindespindel (5) bestimmt, d. h. die Position, in der die Gewindespindel (5) mit dem schnelllösendem Drehkopf (16) der Spindel, die als Auflage für das Werkzeug dienende Grundplatte (3) erreicht, wird das ineinandergreifende Paket aus dem Werkzeug entnommen; wenndasineinandergreifende Paket aus dem Werkzeug entnommen wird, die Gewindespindel (5) mit dem schnelllösenden Drehkopf(16) einenBefehl empfängt, um sich bis zu der Arretiervorrichtung in dem Werkzeug zu bewegen, oder in eine vorbestimmte Position, d. h.zum oberen, vom Sensor (1) erfassten Endanschlag der Gewindespindel (5), wodurchdie Stütze im Stanzverfahren eines weiteren ineinandergreifenden Pakets sichergestellt wird; dieser Arbeitsgang wird durch das gesamte Stanzverfahren wiederholt.

6. Verfahren nach Anspruch 5, **dadurch gekennzeichnet, dass** im Falle einer Fehlfunktion des Servomotors (8) oder der falschen Einstellung der Bewegung der Gewindespindel (5) während der Ausstanzung, ein unkontrollierbares Anstoßen des Kopfes (9) an das ineinandergreifende Paket erfolgt, wodurch der Kopf (9), die Unterlegscheibe (10) und der Kopfträger (11) vertikal verschoben werden, was zu einer Verformung der Tellerfedern (15) führt, wobei zu diesem Zeitpunkt eine vertikale Verschiebung der Schraube (17) erfolgt, worauf diese Schraube (17) den am Ende der Gewindespindel (5) befestigten Sensor (14) betätigt, und der Sensor (14) ein Signal zum Anhalten der Stanzmaschine an das Steuersystems der Stanzmaschine sendet.

## Revendications

1. Système pour améliorer la planéité et la compacité d'emballages emboîtable dans un outil de découpage progressif, le système comprenant un servomoteur (8), couplé directement à l'électronique ou au système de programmation de la machine de découpage et fonctionnant de manière synchrone avec le fonctionnement de la machine de découpage, un engrenage réducteur (6) quitransfèrele mouvement circulaire à une broche filetée (5) qui peut se déplacer dans une direction verticale, une broche filetée (5), sur laquelle est montée une tête rotative à libération rapide (16) de la broche, supportant l'emballageemboîtable dans la région de sortie de l'outil, **caractérisé en ce que** le système comprend en outre un capteur (1) situé dans la région inférieure de l'outil (2), et un capteur (14) fixé à l'extrémité de la broche filetée (5), la tête rotative à libération rapide (16) de la broche comprenant : une tête (9), qui permet un déplacement axial dans le cas où l'emballage emboîtableobturéest mis en rotation à l'intérieur de l'outil, une rondelle (10), dans laquelle la tête (9) est vissée au moyen d'une vis, un support de tête (11) sous lequel deux ressorts à disques (15) sont disposés pour amortir les butées de l'emballage emboîtable contre la tête (9) pendant le découpage, unebague(12) pour fixer le support de tête (11) et pour fixer la tête (9) à la broche filetée (5), uneentretoise (13) pour maintenir un jeu constant entre la bague (12) et le support de la tête (11), et une vis (17) pour fixer l'entretoise (13) au support de la tête (11).

2. Système selon la revendication 1, **caractérisé en ce que**la bague (12) sert également de guide à l'entretoise (13), ce qui permet le déplacement vertical dela vis (17), du support de la tête (11), dela rondelle (10), et dela tête (9).

3. Système selon l'une quelconque des revendications précédentes, **caractérisé en ce que** le capteur (1) est monté dans la région inférieure de l'outil (2) et détermine la position limite supérieure de la broche filetée (5), et par conséquent de la tête rotative à libération rapide (16) de la broche.

4. Système selon l'une quelconque des revendications précédentes, **caractérisé en ce que** le capteur (14) est fixé à l'extrémité de la broche filetée (5) et dans le cas d'un dysfonctionnement du servomoteur (8) signale au système de commande de la machine de découpage d'arrêter la machine de découpage.

5. Procédé de fabrication d'un paquet de rotor stratifié de moteur électrique dans un outil de découpage progressif, le procédé étant effectué sur le système selon les revendications 1 à 4, **caractérisé en ce que,** lorsque le capteur (1) pour déterminer la position limite supérieure de la broche filetée (5) avec la tête rotative à libération rapide (16) de la broche détecte la position limite supérieure de la broche filetée (5), il envoie un signal au système de commande de la machine de découpage, et par l'intermédiaire dudit système au servomoteur (8), qui reçoit l'instruction de déplacement, c'est-à-dire de démarrer le découpage d'un nouvel emballageemboîtable, en conséquence de quoi la broche filetée (5) pivote et la broche filetée (5) avec la tête rotative à libération rapide (16) de la broche est déplacée verticalement par l'épaisseur d'une seule stratification ; lorsque le progiciel de la machine de découpage détermine, sur la base du nombre de tours du servomoteur (8), la position de limite inférieure de la broche filetée (5), c'est à dire la position, dans laquelle la broche filetée (5) avec la tête rotative à libération rapide (16) de la broche atteint le panneau de base (3) qui sert de support à l'outil, l'emballage emboîtable est retiré de l'outil ; lorsque l'emballageemboîtable est retiré de l'outil, la broche filetée (5) avec la tête rotative à libération rapide (16) reçoit la commande dese déplacer jusqu'au dispositif d'arrêt dans l'outil, ou à une position prédéterminée, c'est à dire à la position limite supérieure de la broche filetée (5) détectée par le capteur (1), ce qui remetle support dans ledécoupage d'un autre emballageemboîtable ; ce cycle est répété pendant tout le processusde découpage.

6. Procédé selon la revendication 5, **caractérisé en ce que,**en cas de dysfonctionnement du servomoteur (8), ou du déplacement de la broche filetée (5) pendant le découpage en raison d'un réglage incorrect, une butée non contrôlable de la tête (9) contre l'emballageemboîtable apparaît, amenant la tête (9), la rondelle (10) et le support de la tête (11) à se déplacer verticalement, ce qui entraîne une déformation des ressorts à disques (15), à ce moment un déplacement vertical de la vis (17) a lieu, ladite vis (17) actionnant le capteur (14), fixé à l'extrémité de la broche filetée (5), et ledit capteur (14) signalant au système de commande de la machine de découpage d'arrêter la machine de découpage.
